# EUROPEAN PATENT APPLICATION

(11) **EP 1 146 277 A1**
(43) Date of publication of application: **17.10.2001**
(21) Application number: 01108837.4
(22) Date of filing: 09.04.2001
(51) Int. Cl.: F17C 5/06, F17C 13/02, F17C 5/00

(54) **Compressed gas transporting and filling method**

(30) Priority: 11.04.2000 JP 2000108789
(71) Applicant: L'air Liquide Société Anonyme pour l'étude et l'exploitation des procédés Georges Claude, 75321 Paris Cédex 07 (FR)
(72) Inventor: Hanada, Takuji,, 1-9-1 Shinonome, Koto-ku, Tokyo 135-0062 (JP)
(74) Representative: Le Moenner, Gabriel

(57) **Abstract**

A compressed gas transporting and filling method is provided, in which compressed gas can be transported and filled with good efficiency from a plurality of supply side containers even to a filling container which is variously different in initial pressure or target pressure differs, by effectively utilizing a residual pressure of said supply side containers.

A compressed gas transporting and filling method for transporting and filling compressed gas from a plurality of supply side containers to a filling container by utilization of a pressure difference, which comprises: a first step #1 of measuring the initial pressure of said filling container; a second step #2 ∼ 3 of selecting a supply side container having the minimum pressure among supply side containers having a pressure higher than said initial pressure, a third step #4 of transporting and filling the compressed gas from the selected supply side container to said filling container; and a fourth step #5 ∼ 6 of judging, at that time, whether the pressure of the same filling container has reached a target pressure or has been equalized before it reaches, in which when it is judged, in the fourth step, that the pressure of the filling container has reached the target pressure, the filling is completed, and when it is judged that the pressure of the filling container has been equalized, #7 the second step and after are repeated, with the pressure of said equalization regarded as the initial pressure.

## Description

The present invention relates to a compressed gas transporting and filling method for transporting and filling compressed gas from a plurality of supply side containers to a filling container, and it is particularly useful as a method for transporting and filling compressed gas to a filling container which is variously different in initial pressure such as a fuel tank for a hydrogen fuel automobile.

In a case where compressed gas is transported and filled from a supply side container to a filling container by utilization (this is equalization) of a pressure difference between both the containers, there has been hitherto adopted a method comprising transporting and filling compressed gas from a plurality of supply side containers, each separately filled with the compressed gas, to a filling container, because of the following reasons.

In a case where compressed gas is transported and filled in turn to a plurality of filling containers from a supply side container (volume 10V) having a volume 10 times as large as that of said filling containers (volume V), which has a pressure 20MPaG (G: gauge pressure), so that the filling containers are respectively made to have a pressure of 15MPaG (a target pressure), namely, the residual pressure of the supply side container is lowered in turn to 18.5MPaG, 17MPaG and 15.5MPaG, the fourth filling container cannot be therefore made to have a pressure of 15MPaG and as a result, the compressed gas which corresponds to a pressure of about 15MPaG will remain in the supply side container having a volume 10V. And, in a case where compressed gas is transported and filled in tum to a plurality of filling containers from ten supply side containers (volume V) each having the same volume as that of said filling containers (volume V), which has a pressure 20MPaG, so that the filling containers are respectively made to have a pressure of 15MPaG, on the contrary, a next filling container is equalized in pressure (the residual pressure thereof due to the pressure equalization is 5MPaG) by utilization of the residual pressure of the supply side containers left after the pressure equalization (for example, 10MPaG is given equalizing the pressure of one supply side container) and thereafter the pressure equalization can be carried out in another supply side container which is higher in residual pressure. Since the residual pressure of the supply side container which is less than the target pressure can be utilized, as mentioned above, compressed gas can be transported and filled with good efficiency because almost all of the supply side containers get a residual pressure lower than the target pressure, when the residual pressures of all the ten supply side containers has got less than the target pressure.

In a conventional compressed gas transporting and filling method, namely, there has been adopted a method comprising transporting and filling compressed gas from a plurality of supply side containers in turn to a plurality of filling containers, on the basis of a previously determined order, as the initial pressure (for example, the atmospheric pressure) or target pressure of the filling containers is constant.

If it is tried to perform the transporting and filling operation of compressed gas on the basis of a previously determined order, as mentioned above, in a case where compressed gas is transported and filled, for example, to a filling container which is variously different in initial pressure such as a fuel tank for a hydrogen fuel automobile, however, such a case is caused to arise, where the initial pressure of the fuel tank is higher than the residual pressure of supply side containers which is equalized, and hence it is impossible to perform the transporting and filling of the compressed gas in a determined order.

Although there can be also conceived a methods using a compressor or a method using a liquefaction pump and a vaporizer as the compressed gas filling method, in which compressed gas is filled to a fuel tank, as mentioned above, the former has a problem in maintenance because continuous operation of machines is required and the latter needs sufficient motive power for liquefaction of gas.

It is therefore an object of the present invention to provide a compressed gas transporting and filling method, in which compressed gas can be transported and filled with good efficiency to a filling container which is variously different in initial pressure or target pressure by effectively utilizing the residual pressure of a plurality of supply side containers.

In a conventional compressed gas transporting and filling method, on the other hand, the transporting and filling quality of compressed gas has been calculated by measuring the weights, temperatures and pressures of a filling container before and after the filling operation. However, there are some cases where it is difficult to perform the same measurement on the filling container side, for example, as in a fuel tank of a hydrogen fuel automobile. In such cases, it is necessary to measure the transporting and filling quantity of compressed gas on the supply side thereof.

It is therefore another object of the present invention to provide a compressed gas transporting and filling method, in which the transporting and filling quantity of compressed gas on the supply side can be measured, when the compressed gas is transported and filled with good efficiency, as mentioned above.

The aforementioned purpose can be achieved by the present invention, as follows.

According to the present invention, a compressed gas transporting and filling method for transporting and filling compressed gas from a plurality of supply side containers to a filling container by utilization of a pressure difference comprises a first step of measuring the initial pressure of said filling container, a second step of selecting a supply side container having the minimum pressure among supply side containers having a pressure higher than said initial pressure, a third step of transporting and filling the compressed gas from the selected. supply side container to said filling container, and a fourth step of judging, at that time, whether the pressure of the same filling container has reached a target pressure or has been equalized before it reached, in which when it is judged, in the fourth step, that the pressure of the filling container has reached the target pressure, the filling is completed, and when it is judged that the pressure of the filling container has been equalized, the second step and after are repeated, with the pressure of said equalization regarded as the initial pressure. The term "pressure equalization" used here is a concept including not only a case where the pressures of both the containers become equal, but also a case where they become approximately equal.

In the aforementioned method, it is preferable that the transporting and filling quantities of the compressed gas from the respective supply side containers are sought from the temperature and pressure changes of said supply side container at a time when the third step is performed, and the obtained respective transporting and filling quantities are integrated, thereby seeking the total filling quantity to said filling container.

Furthermore, it is preferable that when it is judged, in the fourth step, that the pressure of the filling container has been equalized before it reaches, it is further judged whether the pressure of said supply side container has been less than a previously set lower limit pressure or not, and when it has been less than the lower limit pressure, the compressed gas is filled from another supply source to said supply side container and thereafter the second step and after are repeated, with the pressure of said equalization regarded as the initial pressure.

Moreover, it is preferable that the respective steps are performed as they are automated by a computer control.

The present invention is effective especially in a case where said filling container is a fuel tank for a hydrogen fuel automobile.

Since a supply side container having a pressure higher than said initial pressure is intentionally selected in the second step, according to the present invention, the transporting and filling of compressed gas can be performed also to a filling container which is variously different in initial pressure. Since a supply side container having the minimum pressure is particularly selected at that time, supply side containers can be preferentially utilized with good efficiency in an order of a lower initial pressure in the transporting and filling of compressed gas. When the pressure of the filling container has not reached the target pressure in the third step, furthermore, the pressure of the filling container can be caused to reach the target pressure, with effectively utilizing the residual pressure, by repeating the second step to fourth step. Also to a filling container which is variously different in initial pressure or target pressure, as a result, the transporting and filling of compressed gas can be performed with good efficiency by effectively utilizing the residual pressure of the plurality of the supply side containers.

In such a case where the transporting and filling quantities of the compressed gas from the respective supply side containers are sought from the temperature and pressure changes of said supply side container at a time when the third step is performed, and the obtained respective transporting and filling quantities are integrated, thereby seeking the total filling quantity to said filling container,
the transporting and filling quantity of the compressed gas on the supply side thereof can be measured when the compressed gas is transported and filled with good efficiency, as mentioned above, because the respective transporting and filling quantities are sought and integrated by the measurements of the respective supply side containers.

In such a case where when it is judged, in the fourth step, that the pressure of the filling container has been equalized before it reaches, it is further judged whether the pressure of said supply side container has been less than a previously set lower limit pressure or not, and when it has been less than the lower limit pressure, the compressed gas is filled from another supply source to said supply side container and thereafter the second step and after are repeated, with a pressure of said equalization regarded as the initial pressure,
only a small quantity of compressed gas can be transported and filled and hence the efficiency thereof becomes lower even if the pressure equalization is carried out, when the transporting and filling of compressed gas is performed by use of a supply side container whose residual pressure is lower in excess. By performing the re-filling of compressed gas when the pressure of said supply side container is less than a previously set lower limit pressure, however, the lowering of the same efficiency can be precluded and the whole efficiency can be enhanced.

In a case where the respective steps are performed as they are automated by a computer control, all the steps can be more quickly performed with good efficiency by quickly conducting various processes such as comparison, arithmetic processing, memorization and output control of the respective steps.

In a case where said filling container is a fuel tank for a hydrogen fuel automobile, there are excepted many cases where the initial pressure or target pressure is variously different, and the present invention having such operational effects as mentioned above is especially effective because it is difficult to provide precise measuring devices on the filling container side in spite of a necessity of measuring the transporting and filling quantity.

Now referring to the accompanying drawings, embodiments of the present invention will be described.

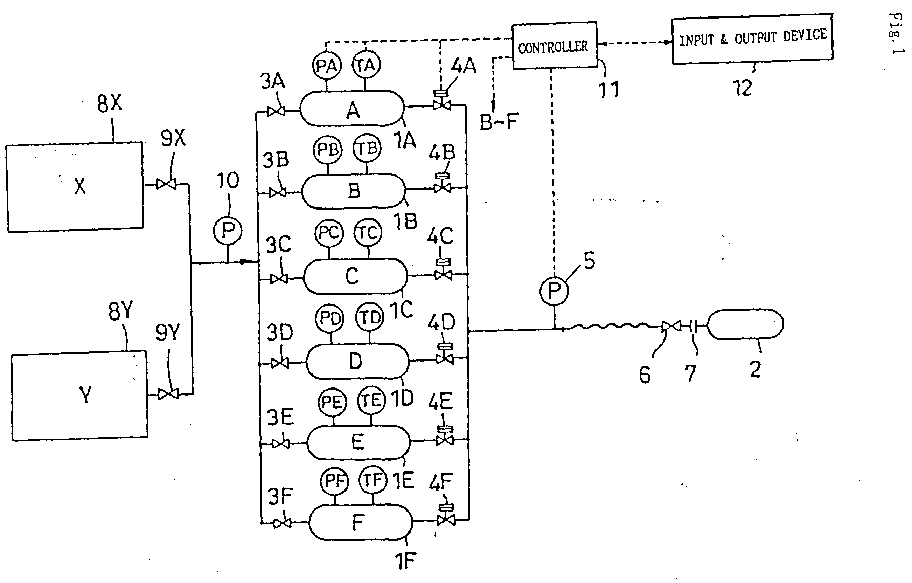

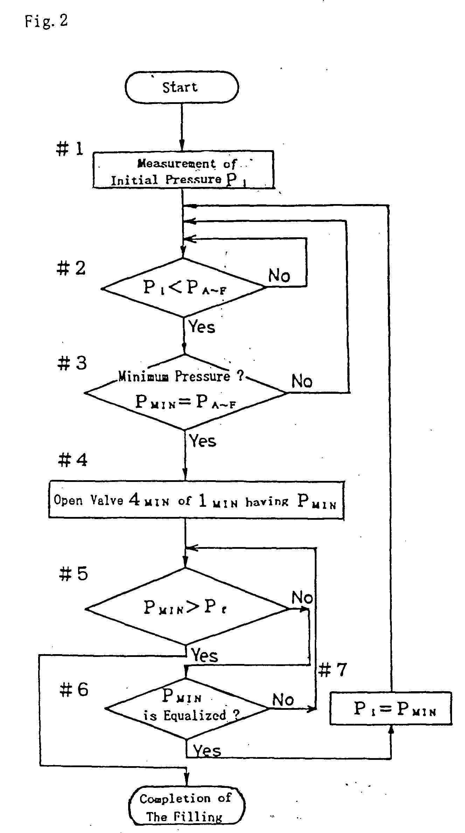

The transporting and filling method according to the present invention comprises, as shown in Fig.1, transporting and filling compressed gas from a plurality of supply side containers 1A ∼ 1F to a filling container 2 by utilization of a pressure difference. In this embodiment, there will be given an example where the respective steps are performed as they are automated by a computer control based on the algorithm shown in Fig.2.

When the transporting and filling method according to the present invention is carried out, the respective steps will be put in practice under the initial situation mentioned below by use of the following apparatuses. As containers on the supply side, for example, six supply side containers 1A ∼ 1F, each equipped with a pressure gauge and a thermometer, are connected in parallel, and inlet side valves 3A ∼ 3F and outlet side control valves 4A ∼ 4F are provided for the respective supply side containers 1A ∼ 1F. A pressure gauge 5 is provided in a line on the downstream side, to which lines from the respective supply side containers 1A ∼ 1F are connected, and a filling hose having a joint 7 and a valve 6 are provided on the downstream side thereof. Fig.1 shows a situation at the transporting and filling time, where a filling container 2 is connected with the fore end of said filling hose by way of the joint 7. As the supply side containers 1A ∼ 1F, it is preferable for accurately measuring the transporting and filling quantity to use one whose volume is near to that of the filling container 2 (for example, 0.5 ∼ 2 times), but in a case where the measuring precision is not required so high, the supply side containers 1A ∼ 1F whose volume is made larger may be used.

To the upstream side of the respective supply side containers 1A ∼ 1F, supply sources 8X, 8Y for filling compressed gas thereto are connected by way of valves 9X, 9Y, where a pressure gauge 10 is provided on a line thereof so that the filling pressure can be measured. In addition, a controller 11 is electrically connected with the pressure gauge 5, the pressure gauges and thermometers of the supply side containers 1A ∼ 1F and the outlet side control valves 4A ∼ 4F, and hence output values from these measuring devices can be always taken in the controller 11.

In the initial situation, for instance, the supply side containers 1A ∼ 1F each contain compressed gas filled therein up to a predetermined pressure (for example, 20MPaG) that is larger than a target pressure (for example, 15MPaG) of the filling container 2, and all the valves expect for the valve 6 get closed.

In the first step, the initial pressure P₁ of the filling container 2 is measured (see: #1 in Fig.2), and this measurement can be carried out by the pressure gauge 5. Although somewhat measurement error is caused to arise in the initial pressure P₁ depending on the pressure in the line having the pressure gauge 5 provided therein, when the valve 6 is opened after the filling container 2 is connected, it is possible to make smaller the measurement error, by previously opening the filling container 2 to the atmosphere before it is connected, or by connecting the same filling container 2 and correcting the measurement on the basis of the pressures of the filling container 2 before and after the valve 6 is opened.

In the second step, a supply side container having the minimum pressure is selected among supply side containers having a pressure higher than the measured initial pressure P₁. This step will be satisfactorily carried out, for example, by comparing in turn the initial pressure P₁ and the pressures P_{A} ∼ P_{F} of the supply side containers 1A ∼ 1F (see: #2 in Fig.2), selecting the minimum value among the pressures P_{A} ∼ P_{F} of the supply side containers having a pressure higher than the initial pressure P1 (see: #3 in Fig.2), and selecting a supply side container 1_{MIN} corresponding to said minimum value. The minimum value of this pressure is memorized as the minimum pressure P_{MIN} in the controller 11. In a case where there are plural supply side containers having the minimum pressure, in addition, the supply side containers may be satisfactorily selected in the preferential order of 1A ∼ 1F.

In the third step, the compressed gas is transported and filled from said supply side container 1_{MIN} to the filling container 2. This operation will be satisfactorily carried out by opening the outlet side control valve 4_{MIN} corresponding to the same supply side container 1_{MIN} (see: #4 in Fig.2). At that time, the transporting and filling of the compressed gas is performed by virtue of a pressure difference between both the containers. It is preferable to regulate the open degree of the outlet side control valve 4_{MIN} so that a rapid pressure change is made hard to arise in both the containers during this operation.

In the fourth step, it is judged, at that time, whether the pressure of the filling container has reached a target pressure Pf or has been equalized before it reached. This step can be carried out, for example, by measuring the pressure P_{MIN} of the supply side container 1_{MIN} and judging whether the same pressure P_{MIN} is larger than the target pressure P_{f} or not (see: #5 in Fig.2), and further judging whether the pressure P_{MIN} is equalized or not when it is not larger than the target pressure P_{f} (see: #6 in Fig.2), and repeating the steps #5 ∼ #6 when it is judged that the pressure P_{MIN} has not been equalized. Concerning the judgement of the pressure equalization, a fact that the pressure P_{MIN} has been equalized can be satisfactorily judged, for example, by measuring in turn the pressure P_{MIN} of the supply side container 1_{MIN} to find that its variation does not arise or becomes small, or by comparing the pressure P_{MIN} and the pressure measured by the pressure gauge 5 to find that the difference between both of them does not arise or becomes small.

When it is judged, in the fourth step, that the pressure of the filling container has reached the target pressure P_{f}, the filling is completed (see: #5 in Fig.2), and when it is judged that the pressure of the filling container has been equalized, the second step and after are repeated at the pressure P_{MIN} of said equalization regarded as the initial pressure P₁ (see: #6 ∼ 7 in Fig.2). By repeating the transporting and filling operation in this repeating step, the pressure of the filling container 2 can be caused to reach the target pressure P_{f}. In addition, the outlet side control valve 4_{MIN} will be satisfactorily closed after anyone of the steps #5, #6 or #7.

Although it is also possible in the present invention to measure the transporting and filling quantity in the third step by a flow meter provided in the transporting and filling line, the total filling quantity to the filling container 2 can be accurately sought by seeking the transporting and filling quantities of the compressed gas from the respective supply side containers from the temperature and pressure changes of the supply side container 1_{MIN} at a time when the third step is performed, and integrating the obtained respective transporting and filling quantities.

Assuming that the transporting and filling of compressed gas is performed in the third step by use of two supply side containers 1A & 1B, namely, the quantity of the compressed gas before the transporting and filling thereof can be calculated from the volume (water volume), temperature T_{A} and pressure P_{A} of the supply side container 1A before the transporting and filling (the coefficient of compression under that condition should be taken into consideration, when correction based on the coefficient of compression is conducted), the quantity of the compressed gas after the transporting and filling thereof can be calculated from the volume, temperature T_{A} and pressure P_{A} of the supply side container 1A after the transporting and filling (the same as above on the coefficient of compression), and the transporting and filling quantity from the supply side container 1A can be accordingly sought by calculating a difference between both of them. Furthermore, the total transporting and filling quantity of the compressed gas to the filling container 2 can be sought by similarly seeking the transporting and filling quantity from the supply side container 1B and thereafter integrating these transporting and filling quantities.

When the above-mentioned calculation is carried out by the controller 11, this calculation may be carried out by conducting, before and after the third steps which are repeated, the arithmetic processing of the measurement values taken therein, memorizing the arithmetic results, and finally integrating these results. The controller 11 is electrically connected with an input and output device 12, and performs, by use of the input and output device 12, the inputting of the target pressure P_{f} and the likes and the outputting (print-out or display) of the total filling quantity sought by the arithmetic processing. Although a fee can be also output, at that time, from the filling quantity and cost, there may be instances where the cost is different depending on the initial pressure P₁ even under the same filling quantity (for example, the cost will be set high when the initial pressure P₁ is high). Even in this case, it may be devised that the fee can be calculated by using as references the initial pressure P₁, the target pressure P_{f} and the cost which varies stepwise.

After the transporting and filling of compressed gas to one filling container 2 is completed, the transporting and filling thereof also to the other filling containers 2 can be performed in such a similar way as mentioned above. However, the residual pressures of the respective supply side containers 1A ∼ 1F are lowered every when the transporting and filling is performed therein. It is therefore necessary to perform, at any point of time, the supply of compressed gas from the supply sources 8X, 8Y to the supply side containers 1A ∼ 1F. Since the supply sources 8X, 8Y each are a tank having a sufficiently large volume (for example, 5 ∼ 20 times) as compared with the supply side containers 1A ∼ 1F in the example of Fig.1, the compressed gas can be transported and filled with utilization of a pressure difference by opening either of the valves 9X, 9Y and opening anyone or all of the inlet side valves 3A ∼ 3F of the supply side containers 1A ∼ 1F. Accordingly, it is preferable that the supply sources 8X, 8Y have a pressure somewhat higher than the initial pressure of the supply side containers 1A ∼ 1F. Before the pressures of both the containers are completely equalized, furthermore, the transporting and filling of the compressed gas may be completed at a time when the pressure of the filling container has reached the set initial pressure of the supply side containers 1A ∼ 1F as it is confirmed by the pressure gauge 10. One of the supply sources 8X, 8Y is a preliminary tank and this preliminary tank will be usually conveyed to a filling factory and filled with compressed gas here. In order to increase the conveying efficiency, it is preferable to use longer containers (for example, a set of 18 containers having a volume of 630L) as the supply sources 8X, 8Y.

When the transporting and filling of compressed gas to such supply side containers ,1A ∼ 1F is performed, it is enabled to perform the transporting and filling to the filling container 2 at all times by separately providing a container group consisting of six supply side containers, and putting the transporting and filling method according to the present invention into practice, as the transporting and filling operation is switched over between a container group consisting of the supply side containers 1A ∼ 1F and the other container group of said six supply side containers.

The transporting and filling method according to the present invention is useful, especially in such a case that compressed gas is transported and filled to a filling container 2, where said filling container 2 is a filling container which is variously different in initial pressure or target pressure such as a fuel tank of a hydrogen fuel automobile and in which the transporting and filling quantity must be measured on the supply side. Although there are various types, for example, a high pressure cylinder type and besides a type using a hydrogen occlusion alloy or the like as the fuel tank of a hydrogen fuel automobile, in addition, the transporting and filling method of the present invention is applicable to any type of them.

An example where the transporting and filling method according to the present invention is concretely put in practice will be given below. In addition, it is assumed that the coefficient of compression is 1 and it is further assumed that supply side containers 1A ∼ 1F have an initial pressure of 20MPaG and a volume of 50L, first and second filling containers 2 have an initial pressure of 0MPaG, a target pressure of 15MPaG and a volume of 50L and a third filling container 2 has an initial pressure of 8MPaG, a target pressure of 12MPaG and a volume of 50L.

In the first filling container 2, compressed gas is transported and filled in tum of 10MpaG → 15MPaG thereto by the supply side containers 1A & 1B, and the residual pressure after the transporting and filling becomes 10MPaG in the supply side container 1A and 15MPaG in the supply side container 1B. In the second filling container 2, compressed gas is transported and filled in turn of 5MpaG → 10MpaG → 15MPaG thereto by the supply side containers 1A ∼ 1C, and the residual pressure after the transporting and filling becomes 5MPaG in the supply side container 1A, 10MPaG in the supply side container 1B and 15MPaG in the supply side container 1C. In the third filling container 2, compressed gas is transported and filled in turn of 9MpaG → 12MPaG thereto by the supply side containers 1B ∼ 1C, without selecting the supply side container 1A, and the residual pressure after the transporting and filling becomes 5MPaG in the supply side container 1A, 9MPaG in the supply side container 1B and 12MPaG in the supply side container 1C.

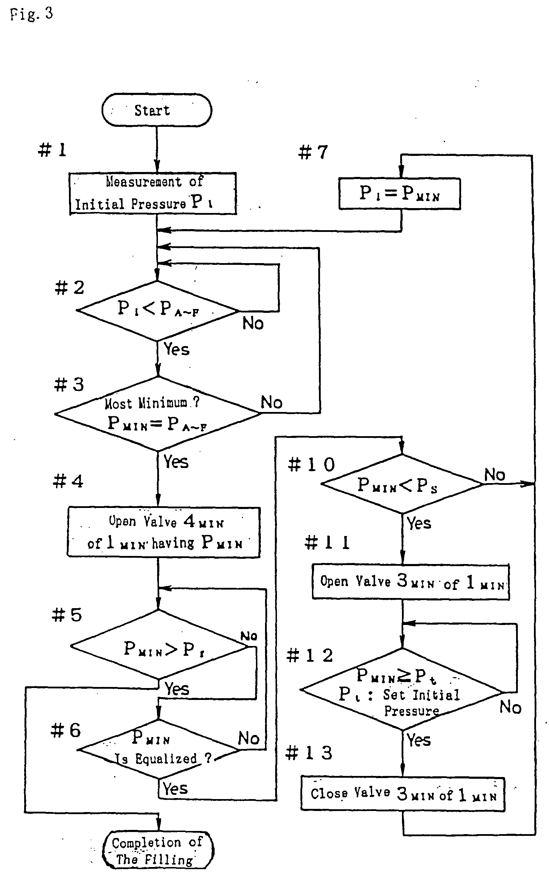

Other embodiments of the present invention will be described below.
(1) Although there has been given, in the aforementioned embodiment, an example where compressed gas is supplied, at any point of time, from the supply sources to the supply side containers, it is preferred that a lower limit pressure of the supply side containers (for example, a pressure 1/5 ∼ 1/50 times as large as the designed initial pressure of the supply side containers) is previously set and the supply of compressed gas is carried out when all or one of the supply side containers has got less than the lower limit pressure. Concretely, this will be satisfactorily carried out in such a manner that when it is judged, in the fourth step, that the pressure of the filling container has been equalized before it reaches, it is further judged whether the pressure of said supply side container has been less than a previously set lower limit pressure or not, and when it has been less than the lower limit pressure, the compressed gas is filled from another supply source to said supply side container and thereafter the second step and after are repeated, with the pressure of said equalization regarded as the initial pressure.
   In this case, the pressure gauge 10 and the inlet side valves 3A ∼ 3F are further electrically connected to the controller 11 (this situation is not shown) and such an algorithm as shown in Fig.3 is adopted. After it is judged, in the step #6, that the pressure P_{MIN} has been equalized, according to this algorithm, it is judged whether the pressure P_{MIN} is smaller than the set lower limit pressure Pₛ or not (see: #10 in Fig.3), and when the pressure P_{MIN} is smaller, the inlet side valve 3_{MIN} of the supply side container 1_{MIN} having the minimum pressure will be opened (see: #11 in Fig.3). By virtue of this opening of the inlet side valve 3_{MIN}, the filling from the supply source 8X or supply source 8Y is started up, it is repeatedly judged whether the pressure P_{MIN} of the supply side container 1_{MIN} is more than the set initial pressure Pt or not (see: #12 in Fig.2), and when the pressure P_{MIN} has got more than the set initial pressure Pt, the inlet side valve 3_{MIN} of the supply side container 1_{MIN} is closed (see: #13 in Fig.3). The step #7 and after will be similarly carried out. Owing to such operation as mentioned above, a further group of preliminary containers can be dispensed.
(2) Although there has been given, in the aforementioned embodiment, an example where the transporting and filling of the third step is carried out until the pressure of the filling container is equalized, the filling of compressed gas may be completed by immediately closing the outlet side control valves of the supply side containers, when it is judged, in the fourth step, that the pressure of the filling container has reached the target pressure.
(3) Although there has been given, in the aforementioned embodiment, an example where the supply source consists of two tank, the filling of compressed gas may be performed by supplying compressed gas from an adjacent gas production factory directly to the supply side containers through a line.
   - Fig.1 is a schematic block diagram showing one example of the apparatus used in the compressed gas transporting and filling method according to the present invention;
   - Fig.2 is a flow sheet showing one example of the algorithm of the compressed gas transporting and filling method according to the present invention; and
   - Fig.3 is a flow sheet showing one example of another algorithm.

1A ∼ 1 F - supply side containers, 2 - filling container, 3A ∼ 3F - inlet side valves, 4A ∼ 4F - outlet side control valves, 11 - controller.

## Claims

1. A compressed gas transporting and filling method for transporting and filling compressed gas from a plurality of supply side containers to a filling container by utilization of a pressure difference, which comprises:
a first step of measuring the initial pressure of said filling container;
a second step of selecting a supply side container having the minimum pressure among supply side containers having a pressure higher than said initial pressure,
a third step of transporting and filling the compressed gas from the selected supply side container to said filling container; and
a fourth step of judging, at that time, whether the pressure of the same filling container has reached a target pressure or has been equalized before it reaches,
in which when it is judged, in the fourth step, that the pressure of the filling container has reached the target pressure, the filling is completed, and when it is judged that the pressure of the filling container has been equalized, the second step and after are repeated, with the pressure of said equalization regarded as the initial pressure.

2. A compressed gas transporting and filling method according to claim 1, in which the transporting and filling quantities of the compressed gas from the respective supply side containers are sought from the temperature and pressure changes of said supply side container at a time when the third step is performed, and the obtained respective transporting and filling quantities are integrated, thereby seeking the total filling quantity to said filling container.

3. A compressed gas transporting and filling method according to claim 1 or 2, in which when it is judged, in the fourth step, that the pressure of the filling container has been equalized before it reaches, it is further judged whether the pressure of said supply side container has been less than a previously set lower limit pressure or not, and when it has been less than the lower limit pressure, the compressed gas is filled from another supply source to said supply side container and thereafter the second step and after are repeated, with the pressure of said equalization regarded as the initial pressure.

4. A compressed gas transporting and filling method according to anyone of claims 1 to 3, in which the respective steps are performed as they are automated by a computer control.

5. A compressed gas transporting and filling method according to anyone of claims 1 to 4, in which said filling container is a fuel tank for a hydrogen fuel automobile.
